# EUROPEAN PATENT APPLICATION

(11) **EP 2 482 500 A1**
(43) Date of publication of application: **01.08.2012**
(21) Application number: 10826007.6
(22) Date of filing: 10.08.2010
(51) Int. Cl.: H04L 12/56

(54) **METHOD FOR PERFORMING DYNAMIC TUNNEL MESSAGE FORWARDING AND SWITCH THEREOF**

(30) Priority: 26.10.2009 CN 200910205540
(71) Applicant: ZTE Corporation, Shenzhen, Guangdong 518057 (CN)
(72) Inventor: LIU, Xiaodong, Guangdong 518057 (CN)
(74) Representative: Anderson, Angela Mary
(86) International application number: PCT/CN2010/075850
(87) International publication number: WO 2011/050644

(57) **Abstract**

A method and switch for realizing dynamic tunnel message forwarding are disclosed, the switch is located at the edge of an IPv6 network and includes a Central Processing Unit (CPU) and an Application Specific Integrated Circuit (ASIC) switching chip; the method includes: presetting an aggregation routing table item of a dynamic tunnel in an ASIC hardware forwarding table of a layer-3 switch located at the edge of the IPv6 network to point to the CPU; after receiving an IPv6 message, if the switch judges that the message points to the dynamic tunnel according to IPv6 route lookup, sending the message upward to the CPU according to the aggregation routing table item; after receiving the message, the CPU, by using a software routing mode, storing a corresponding relation between acquired layer-2 information and a network prefix of an IPv6 destination address of the message and synchronizing the corresponding relation to the ASIC hardware forwarding table, and forwarding the message out from an output port to which the layer-2 information corresponds. The present invention can fully utilize ASIC forwarding resources and enhance efficiency of the route lookup.

## Description

### Technical Field

The present invention relates to data communication technology, and particularly, to a method and switch for realizing dynamic tunnel message forwarding.

### Background of the Related Art

With the rapid development of the internet scale, many limitations at the beginning of the design of Internet Protocol (IP) become increasingly obvious. In particular, the original 32-bit IP address space is far from satisfying development needs of the current Internet. In the circumstances, Internet Protocol version 6 (IPv6) protocol emerges as the times require. Although the transition from the IP protocol to the IPv6 protocol is a historical necessity, this process is not accomplished at one stroke. In the process of deploying the IPv6 network, the IPv4 network will definitely exist in large. In the process of solving the problem of transition from IPv4 to IPv6, many transition technologies are generated, and technologies therein which attract the most attention are a tunnel technology and a dual-stack technology. Since the tunnel technology only needs to be deployed at the edge of IPv4/IPv6 networks, it greatly reduces the cost of equipment renewal and becomes a major transition technology.

The main contents of the tunnel technology are that: after receiving a message, an edge device of the IPv6 network performs IPv6 route lookup, and if the IPv6 route points to a tunnel, performs IPv4 protocol encapsulation to the received message according to tunnel information, and then forwards the encapsulated message in the IPv4 network according to the IPv4 route; when the message reaches the edge of the IPv4 network, removes the IPv4 header, and then forwards the message again according to the IPv6 route. In the process, a relative prominent feature is that, the edge device of the network which the IPv6 message passes through must be IPv4/IPv6 dual protocol stack and needs to perform the route lookup two times. It puts forward a high performance requirement for the dual-stack network device located at the edge of the network, and especially poses challenge to the hardware forwarding function of a layer-3 switching device mainly based on Application Specific Integrated Circuit (ASIC) forwarding.

A layer-3 switching function is implemented by adding a layer-3 routing function on the switch. In short, layer-3 switching firstly needs to perform software routing and forwarding to the first received strange data stream, and then to bind layer-2 information acquired according to the first routing forwarding to a layer-3 routing table; when forwarding subsequent messages which have the same destination address, the bound layer-2 information in the layer-3 routing table can be directly used to perform encapsulation and forwarding, that is, "one-time routing and multi-time switching", which improves efficiency of data packet forwarding effectively. Since a hardware buffer can be implemented by an ASIC switching chip, efficiency of the data forwarding can be greatly improved and equipment cost can be effectively reduced by using the above method.

It is not difficult for the layer-3 switching technology to process message forwarding of a static tunnel. One static tunnel only corresponds to one IPv4 destination address and the output interface is relatively fixed, thus, even though route of the IPv4 network has a dynamic change, the layer-3 routing table can also be updated dynamically according to information of a new changed output interface, thereby implementing fast forwarding.

However, the implementation becomes more difficult for a dynamic tunnel technology. Generally, the dynamic tunnel technology uses an IPv6 address with a fixed format, and the address includes an IPv4 address. When a tunnel encapsulation is performed on the message, it needs to acquire the IPv4 destination address according to the IPv6 destination address in the IPv6 message to encapsulate. As the IPv4 destination address changes dynamically, it will inevitably lead to the difference of the next hop address, and then leads to a variety of layer-2 information of the output interface, and thus, a many-to-many mapping relationship among an IPv6 route set, an IPv4 route set and a layer-2 information set is faced. Certainly, it is not difficult to solve that problem by using a Network Processor (NP) implementation technology which implements forwarding through twice route lookup; however, it has too many problems to deal with for the ASIC switching chip which performs switching and forwarding by directly using the IPv6 route to index the layer-2 information.

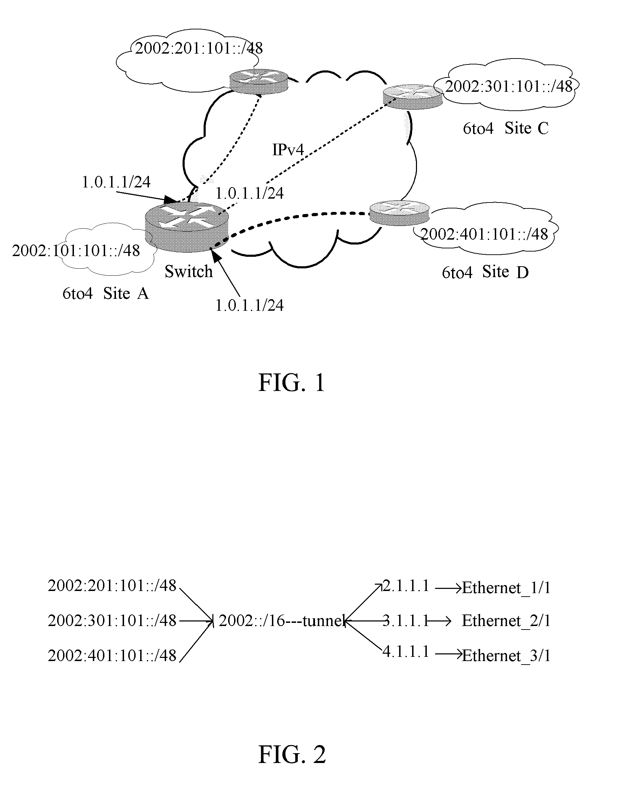

FIG. 1 illustrates a simple topological diagram of interconnecting IPv6 islands by using 6to4 tunnels, wherein, sites A, B, C and D can only connect with the IPv4 network, thus an IPV6/IPV4 dual-stack network device is required to be deployed at the edge of the site. It is assumed that a layer-3 switch is deployed at the edge of site A, which supports the IPv6/IPv4 dual-stack protocol. The 6to4 tunnel is configured in that device, a network prefix of IPv6 site of the device is 2002::101:101::/48, and an intercommunication with other three sites is implemented by configuring the output port of the prefix 2002::/16 as the tunnel. When a data message needs to be sent from the site A to the site B, the switch searches the route according to the destination address 2002:201:101::/48 of the message and finds that the output port is the tunnel, and then performs IPv4 encapsulation according to the IPv4 address 2.1.1.1, searches the IPv4 routing table and finds that the next hop network segment is 1.0.1.0/24, and then acquires the layer-2 information to perform encapsulation and forwarding according to the next hop information of the IPv4 routing. Based on the layer-3 switching principle, the acquired layer-2 information should be directly bound to the routing prefix 2002::/16 of the IPv6 at the time, thereby implementing fast forwarding of the ASIC in the subsequent message forwarding. However, a problem will be caused that messages to the other sites can not be forwarded.

As shown in FIG. 2, not all the messages are sent to the site B, when messages sent to the site C (of which the destination address is 2002::301:101::/48) or the site D (of which the destination address is 2002::401:101::/48) are passing, the layer-3 switch will perform encapsulation according to the incorrect layer-2 information and the messages fail to reach the correct destination site. Therefore, a problem which is difficult to be solved in the layer-3 switching and forwarding process is generated. Certainly, a resolution for the problem can be implemented by adding the network processor to perform the twice route lookup, but the cost of the layer-3 switch will be greatly increased and the advantage of high-speed forwarding of the switch can not be implemented.

### Summary of the Invention

The present invention provides a method and switch for realizing dynamic tunnel message forwarding, to solve a technical bottleneck that ASIC fast forwarding can not be implemented on the existing layer-3 switch.

In order to solve the existing problem, the present invention provides a method for realizing dynamic tunnel message forwarding, which comprises:
presetting an aggregation routing table item of a dynamic tunnel in an ASIC hardware forwarding table of a layer-3 switch located at the edge of an IPv6 network to point to a CPU; after the switch receives an IPv6 message, and if the switch judges that the message points to the dynamic tunnel according to IPv6 route lookup, sending the message upward to the CPU according to the aggregation routing table item; after receiving the message, the CPU, by using a software routing mode, storing a corresponding relation between acquired layer-2 information and a network prefix of an IPv6 destination address of the message and synchronizing the corresponding relation to the ASIC hardware forwarding table, and forwarding the message out from an output port to which the layer-2 information corresponds.

The above method can further comprise:
after the switch receiving the IPv6 message, and if the switch searches out output port information of the IPv6 message in the ASIC hardware forwarding table according to an IPv6 route, performing hardware forwarding to the IPv6 message, and the flow ending.

The above method can further have the following characteristic:
after receiving the message, the CPU performs the IPv6 route lookup according to the IPv6 destination address of the message, if judging that the next hop of route is a dynamic tunnel interface, further judges whether a table item to which the network prefix of the IPv6 destination address corresponds is saved in a dynamic tunnel forwarding table, and if the table item to which the network prefix of the IPv6 destination address corresponds is saved in the dynamic tunnel forwarding table, forwarding the message out from the output port to which the layer-2 information corresponds according to the layer-2 information in the table item, and the flow ending; if the table item to which the network prefix of the IPv6 destination address corresponds is not saved in the dynamic tunnel forwarding table, writes the network prefix of the IPv6 destination address into the dynamic tunnel forwarding table, performs an IPv4 protocol encapsulation to the message according to acquiring an IPv4 destination address from the IPv6 destination address of the message; performs an IPv4 route lookup to the encapsulated message, and after learning the layer-2 information of the next hop through an Address Resolution Protocol (ARP), updating the layer-2 information in the table item to which the network prefix corresponds in the dynamic tunnel forwarding table as the layer-2 information of the next hop.

The present invention further provides a switch for realizing dynamic tunnel message forwarding, which is located at the edge of an IPv6 network and comprises a Central Processing Unit (CPU) and an Application Specific Integrated Circuit (ASIC) switching chip;
an aggregation routing table item of a dynamic tunnel in a hardware forwarding table of the ASIC switching chip is preset to point to the CPU; and the ASIC switching chip is configured to: after receiving an IPv6 message, and if judging that the message point to the dynamic tunnel according to IPv6 route lookup, send the message upward to the CPU according to the aggregation routing table item;
the CPU is configured to: after receiving the message, by using a software routing mode store a corresponding relation between acquired layer-2 information and a network prefix of an IPv6 destination address of the message and synchronize the corresponding relation to the ASIC hardware forwarding table, and forward the message out from an output port to which the layer-2 information corresponds.

The above switch can further have the following characteristic:
the ASIC switching chip is further configured to: after receiving the IPv6 message, search output port information of the IPv6 message in the ASIC hardware forwarding table, if the output port information of the IPv6 message is searched out, perform hardware forwarding to the IPv6 message.

The above switch can further have the following characteristic:
the CPU is further configured to:
   after receiving the message, perform the IPv6 route lookup according to the IPv6 destination address of the message, if judging that the next hop of a route is a dynamic tunnel interface, further judge whether a table item to which the network prefix of the IPv6 destination address corresponds is saved in a dynamic tunnel forwarding table, and if the table item to which the network prefix of the IPv6 destination address corresponds is saved in the dynamic tunnel forwarding table, forward the message out from the output port to which the layer-2 information corresponds according to the layer-2 information in the table item; and
the CPU is configured to store the corresponding relation between the acquired layer-2 information and the network prefix of the IPv6 destination address of the IPv6 message according to the following way: if judging that the table item to which the network prefix of the IPv6 destination address corresponds is not saved in the dynamic tunnel forwarding table, writing the network prefix of the IPv6 destination address into the dynamic tunnel forwarding table, performing an IPv4 protocol encapsulation to the message according to acquiring an IPv4 destination address from the IPv6 destination address of the message, performing IPv4 route lookup to the encapsulated message, and after learning the layer-2 information of the next hop through an Address Resolution Protocol (ARP), updating the layer-2 information in the table item to which the network prefix corresponds in the dynamic tunnel forwarding table as the learned layer-2 information.

The above switch can further have the following characteristic:
the CPU can comprise: an IPv6 message forwarding module, a tunnel forwarding module, a tunnel forwarding table update module, an IPv4 message forwarding module, an encapsulation information update module, and a storage module which stores the dynamic tunnel forwarding table;
the IPv6 message forwarding module can be configured to: perform the IPv6 route lookup to the message which is sent to the CPU upward according to the destination address, if judging that the next hop of the route is the dynamic tunnel interface, send the message to the tunnel forwarding module;
the tunnel forwarding module can be configured to: after receiving the message sent by the IPv6 message forwarding module, judge whether the table item to which the network prefix of the IPv6 destination address of the message corresponds is saved in the dynamic tunnel forwarding table, if the table item to which the network prefix of the IPv6 destination address of the message corresponds is saved in the dynamic tunnel forwarding table, forward the received message out from the output port to which the layer-2 information corresponds according to the layer-2 information in the table item; and if the table item to which the network prefix of the IPv6 destination address of the message corresponds is not saved in the dynamic tunnel forwarding table, send the network prefix of the IPv6 destination address to the tunnel forwarding table update module, perform the IPv4 protocol encapsulation to the above message according to acquiring the IPv4 destination address from the IPv6 destination address of the message, and then send the encapsulated message to the IPv4 forwarding module;
the tunnel forwarding table update module is configured to: after receiving the network prefix sent by the tunnel forwarding module, judge whether the network prefix has been saved in the dynamic tunnel forwarding table; if the network prefix has not been saved in the dynamic tunnel forwarding table, create a new table item for that network prefix in the dynamic tunnel forwarding table;
the IPv4 message forwarding module is configured to: perform the IPv4 route lookup to the received encapsulated message, after learning the layer-2 information of the next hop through the ARP, send the layer-2 information of the next hop to the encapsulation information update module, and after performing a layer-2 encapsulation to the encapsulated message, forward the message out from the output port to which the layer-2 information of the next hop corresponds; and
the encapsulation information update module is configured to: after receiving the layer-2 information of the next hop, update the layer-2 information in the table item to which the network prefix corresponds in the dynamic tunnel forwarding table as the learned layer-2 information of the next hop.

The above switch can further have the following characteristic:
the tunnel forwarding table update module is further configured to: after judging that the network prefix has been saved in the dynamic tunnel forwarding table, restore an aging timer of the table item in which the network prefix is located to an initial value.

The above switch can further have the following characteristic:
the tunnel forwarding table update module is further configured to maintain a timing aging mechanism, and when an aging time is up, set a deletion flag for the table item.

After using the present invention, it has the following advantages that: the forwarding flow of the ASIC switching chip is not changed, the advantage of high-speed message forwarding of the ASIC switching chip is fully utilized; advantages of configuration of the dynamic tunnel being simple and the maintenance cost being low are protected; and the forwarding table information is dynamically established and updated, ASIC forwarding resources can be fully utilized, and efficiency of the route lookup is enhanced.

### Brief Description of Drawings

FIG. 1 is a network topology diagram of a 6to4 tunnel in a dynamic tunnel technology in the related art;
FIG. 2 is a schematic diagram of one-to many bottleneck in a dynamic tunnel forwarding table in the related art;
FIG. 3 is a schematic diagram of a connection relation between modules in a CPU according to an embodiment of the present invention;
FIG. 4 is a structural diagram of a hardware forwarding table before and after processing by adopting the present invention; and
FIG. 5 is a work flow chart of performing dynamic tunnel message forwarding according to an application example of the present invention.

### Preferred Embodiments of the Present Invention

The technical scheme of the present invention will be described in detail in combination with the accompanying drawings and embodiments below.

The basic conception of the present invention is: presetting an aggregation routing table item of a dynamic tunnel in an ASIC hardware forwarding table of a layer-3 switch located at the edge of an IPv6 network to point to a CPU; after the switch receives an IPv6 message, and if the switch judges that the message points to the dynamic tunnel according to IPv6 route lookup, sending the message upward to the CPU according to the above aggregation routing table item; after receiving the message, the CPU, by using a software routing mode, storing a corresponding relation between acquired layer-2 information and a network prefix of an IPv6 destination address of the message and synchronizing the corresponding relation to the above ASIC hardware forwarding table, and forwarding the message out from an output port to which the layer-2 information corresponds.

In addition, if searches out output port information of the above IPv6 message in the ASIC hardware forwarding table according to an IPv6 route, the switch performs hardware forwarding to the message. The advantage of the layer-3 switching technology of "one time routing and multi-time switching" is really realized.

Furthermore, after receiving the message, the CPU, by using the software routing mode, storing the corresponding relation between the acquired layer-2 information and the network prefix of the IPv6 destination address of the message can be specifically implemented through the following way that:
after receiving the message, the CPU performs the IPv6 route lookup according to the IPv6 destination address of the message, if judging that the next hop of a route is a dynamic tunnel interface, further judges whether a table item to which the network prefix of the above IPv6 destination address corresponds is saved in a dynamic tunnel forwarding table, and if the table item to which the network prefix of the above IPv6 destination address corresponds is saved in the dynamic tunnel forwarding table, forwards the above message out from the corresponding output port directly according to the layer-2 information in the table item, and the flow ends; if the table item to which the network prefix of the above IPv6 destination address corresponds is not saved in the dynamic tunnel forwarding table, writes the network prefix of the IPv6 destination address into the dynamic tunnel forwarding table, performs an IPv4 protocol encapsulation to the above message according to an IPv4 destination address acquired from the IPv6 destination address of the message, performs IPv4 route lookup to the encapsulated message, and after learning the layer-2 information of the next hop (including a destination MAC address and output port information) through an Address Resolution Protocol (ARP), updates the layer-2 information in the above table item of the network prefix in the dynamic tunnel forwarding table as the learned layer-2 information.

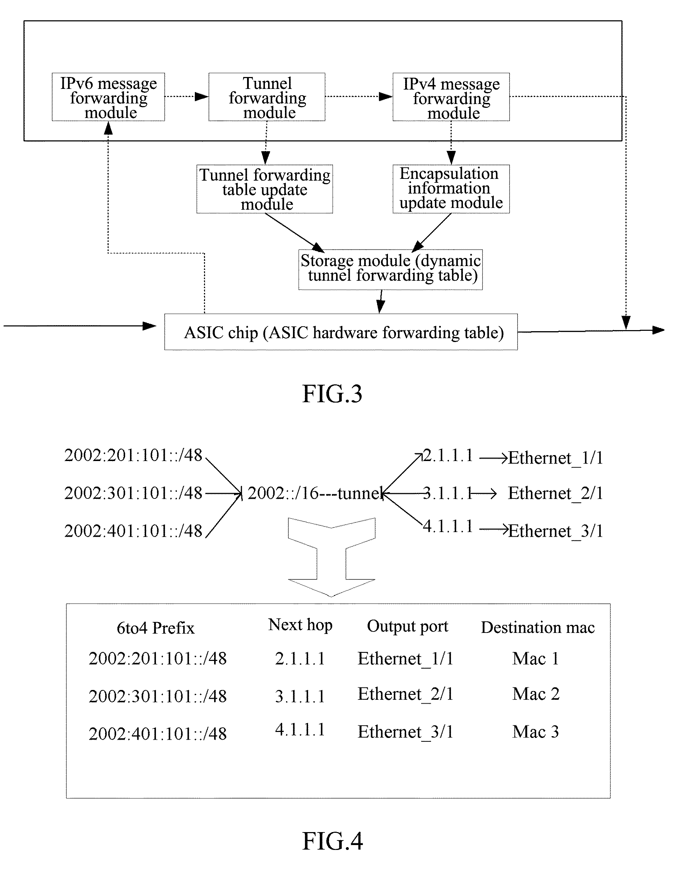

The switch mentioned in the present invention is located at the edge of the IPv6 network, and includes an ASIC switching chip and a CPU. As shown in FIG. 3, the CPU in the layer-3 switch according to the present invention includes: an IPv6 message forwarding module, a tunnel forwarding module, a tunnel forwarding table update module, an IPv4 message forwarding module, an encapsulation information update module and a storage module, and the storage module stores the dynamic tunnel forwarding table, and will synchronize the forwarding table to each line card in a distributed system regularly. The flow of each component unit implementing a software switching comprises the following steps.
a, the IPv6 message forwarding module performs the IPv6 route lookup to the message which is sent to the CPU upward according to a destination address, and if judging that the next hop of the route is the dynamic tunnel interface, sends the message to the tunnel forwarding module to further process.
b, after receiving the message, the tunnel forwarding module judges whether the table item to which the network prefix of the IPv6 destination address of the message corresponding is saved in the dynamic tunnel forwarding table, if yes, forwards the received message out from the corresponding output port directly according to the layer-2 information in the table item, and the flow ends; and if no, sends the network prefix of the IPv6 destination address to the tunnel forwarding table update module, and performs the IPv4 protocol encapsulation to the above message according to acquiring the IPv4 destination address from the IPv6 destination address of the message, and then sends the encapsulated message to the IPv4 forwarding module to further process;
   the specific flow of performing the IPv4 encapsulation to the above message is that: the tunnel forwarding module performs an IPv4 header encapsulation to the message according to a tunnel type, if the tunnel type is the dynamic tunnel, acquires a destination IP address of the IPv4 encapsulation according to the destination IPv6 address in an IPv6 header, for example, if the tunnel type is a 6to4 tunnel, judges whether the front 16 bits of the IPv6 destination address is 2002, if the matching is succeeded, intercepts bits from 17th to 48th of the address to serve as the encapsulated destination IP address, and performs the IPv4 encapsulation to the message together with a source IP address configured by the interface.
c, after receiving the network prefix sent by the tunnel forwarding module, the tunnel forwarding table update module judges whether the network prefix has been saved in the dynamic tunnel forwarding table; if yes, updates an aging timer of the table item in which the network prefix is located (i.e., restores the aging timer of the table item to an initial value), and if no, creates a new table item for the network prefix in the dynamic tunnel forwarding table; the tunnel forwarding table update module also maintains a timing aging mechanism, and sets a deletion flag for the table item when an aging time is up.
d, the IPv4 message forwarding module performs the IPv4 route lookup to the received encapsulated message, after learning the layer-2 information of the next hop (including the destination MAC address and the output port information) through an Address Resolution Protocol (ARP), sends the layer-2 information to the encapsulation information update module, and after performing a layer-2 encapsulation to the message, forwards the message out from the output port to which the layer-2 information of the next hop corresponds.
e, after receiving the layer-2 information, the encapsulation information update module updates the layer-2 information in the table item of the above network prefix in the dynamic tunnel forwarding table as the learned layer-2 information of the next hop. In addition, when reasons, such as a change of the next hop information of the IPv4 route, etc., causes that the layer-2 information is unavailable, the encapsulation information update module needs to age the table item to which the layer-2 information corresponds promptly, synchronizes the update result to each line card, and triggers the dynamic tunnel forwarding table to relearn.

It should be noted that, the execution sequence of the above steps of c and d is arranged in a random order, and the steps c and d only need to be guaranteed to execute after step b and before step e.

FIG. 4 is a diagram of a mapping relationship of the tunnel forwarding table after processing by adopting the present invention. It can be seen from the diagram that dynamic tunnel message forwarding can be implemented by adopting the present invention.

The present invention will be further described with an application example of the present invention below.

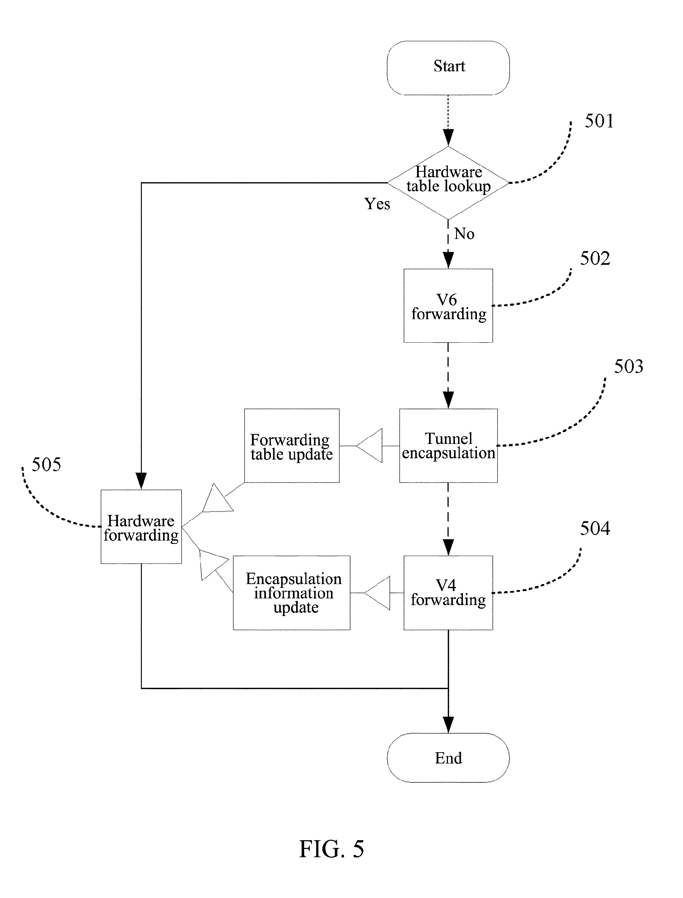

As shown in FIG. 5, the flow of implementing 6to4 tunnel message forwarding includes the following steps.

In step 501, soft and hardware forwarding is judged.

After the IPv6 message of a 6to4 network reaches a 6to4 tunnel device (i.e., layer-3 switch) at the edge of the network, an ASIC hardware forwarding table is firstly searched, and after a specific forwarding table item of 48-bit prefix is found, a hardware forwarding flow is directly executed, and the flow ends; and if a 48-bit 6to4 forwarding table entry can not be found, the message is sent upward to a CPU according to 16-bit prefix information of 2002 to go through a software forwarding flow in step 502.

In step 502, a processing process of the IPv6 message forwarding is performed.

For the message sent by driving to the CPU, it is decided to go through an IPv6 forwarding flow according to an Ethernet type, an IPv6 message forwarding module performs the IPv6 route lookup through an IPv6 destination address to decide the next forwarding, and decides to go through a tunnel forwarding flow in step 503 according to a static route of 2002;;/16.

In step 503, a tunnel forwarding module performs a message encapsulation according to the embedded IPv4 address.

The tunnel forwarding module will decide the message forwarding flow according to the tunnel type. Since the tunnel type is the 6to4 tunnel, the tunnel forwarding module will intercept bits from 17th to 48th in the IPv6 destination address to generate an destination IPv4 address here, performs the message encapsulation by using the address and an IPv4 source address configured on the interface, and sends the encapsulated IPv6inIPv4 message to an IPv4 message forwarding module; wherein, the update flow of the dynamic tunnel forwarding table is the same as the above step c, which will not go into detail here.

In step 504, the IPv4 message forwarding module performs a layer-2 message encapsulation according to an IPv4 route and ARP information.

Here, for the received IPv4 message, the module firstly performs the IPv4 route lookup, and searches a ARP table according to the next hop address to initiate ARP learning, after acquiring the layer-2 information, performs the message encapsulation, and sends the encapsulated message to a port to which the layer-2 information corresponds, wherein, the process flow of the layer-2 encapsulation information is the same as the above step e.

As an storage module will update the dynamic tunnel forwarding table to the ASIC hardware forwarding table, hereafter, for the subsequent IPv6 data packets which reach the same 6to4 site network (i.e., the front 48 bits of the network prefix are identical), they will be directly hit in the ASIC hardware forwarding table, and the message is directly encapsulated and forwarded according to the encapsulation information synchronized to the hardware previously.

In conclusion, since most ASIC switching chips have supported old dynamic tunnel encapsulation now, but can not implement twice route lookup in hardware due to the limitation of the layer-3 switching, which makes the switching implementation of the dynamic tunnel forwarding confronted with a bottleneck. With the scheme of the present invention, the layer-2 encapsulation information is acquired through twice route lookup in software, and different hardware table items are established for dynamic tunnel sites in different network segments, which can correspond to the same dynamic tunnel interface to implement the IPv4 encapsulation, but correspond to different layer-2 information to implement that messages are forwarded to different ports, thereby really implementing high-speed forwarding of "one time routing and multi-time switching" of the ASIC switching.

Certainly, the present invention can still have other various embodiments, those skilled in the art can make various corresponding changes and variations according to the present invention without departing from the spirit and essence of the present invention, and these corresponding changes and variations should all fall into the protection scope of the appended claims of the present invention.

### Industrial Applicability

Compared with the related art, in the present invention, the forwarding flow of the ASIC switching chip is not changed, the advantage of high-speed message forwarding of the ASIC switching chip is fully utilized; advantages of configuration of the dynamic tunnel being simple and the maintenance cost being low are protected; and the forwarding table information is dynamically established and updated, ASIC forwarding resources can be fully utilized, and efficiency of the route lookup is enhanced.

## Claims

1. A method for realizing dynamic tunnel message forwarding, comprising:
presetting an aggregation routing table item of a dynamic tunnel in an Application Specific Integrated Circuit (ASIC) hardware forwarding table of a layer-3 switch located at the edge of an IPv6 network to point to a Central Processing Unit (CPU);
the switch receiving an IPv6 message, if the switch judges that the received IPv6 message points to the dynamic tunnel according to IPv6 route lookup, sending the IPv6 message upward to the CPU according to the aggregation routing table item; and
the CPU receiving the IPv6 message, by using a software routing mode, storing a corresponding relation between acquired layer-2 information and a network prefix of an IPv6 destination address of the IPv6 message and synchronizing the corresponding relation to the ASIC hardware forwarding table, and forwarding the IPv6 message out from an output port to which the layer-2 information corresponds.

2. The method according to claim 1, wherein, after the step of the switch receiving the IPv6 message, the method further comprises:
if the switch searches out output port information of the IPv6 message in the ASIC hardware forwarding table according to an IPv6 route, performing hardware forwarding to the IPv6 message, and the flow ending.

3. The method according to claim 1, wherein,
after the step of the CPU receiving the IPv6 message, the method further comprises:
the CPU performing the IPv6 route lookup according to the IPv6 destination address of the received IPv6 message, if judging that the next hop of route is a dynamic tunnel interface, further judging whether a table item to which the network prefix of the IPv6 destination address corresponds is saved in a dynamic tunnel forwarding table, and if the table item to which the network prefix of the IPv6 destination address corresponds is saved in the dynamic tunnel forwarding table, forwarding the IPV6 message out from the output port to which the layer-2 information corresponds according to the layer-2 information in the table item, and the flow ending;
the step of storing the corresponding relation between the acquired layer-2 information and the network prefix of the IPv6 destination address of the IPv6 message comprises: if the CPU judges that the table item to which the network prefix of the IPv6 destination address corresponds is not saved in the dynamic tunnel forwarding table, writing the network prefix of the IPv6 destination address into the dynamic tunnel forwarding table, performing an IPv4 protocol encapsulation to the IPv6 message according to acquiring an IPv4 destination address from the IPv6 destination address, performing an IPv4 route lookup to the encapsulated message, and after learning the layer-2 information of the next hop through an Address Resolution Protocol (ARP), updating the layer-2 information in the table item to which the network prefix corresponds in the dynamic tunnel forwarding table as the layer-2 information of the next hop.

4. A switch for realizing dynamic tunnel message forwarding, which is located at the edge of an IPv6 network, and comprises a Central Processing Unit (CPU) and an Application Specific Integrated Circuit (ASIC) switching chip; wherein,
an aggregation routing table item of a dynamic tunnel in a hardware forwarding table of the ASIC switching chip is preset to point to the CPU; and the ASIC switching chip is configured to: after receiving an IPv6 message, and if judging that the received IPv6 message points to the dynamic tunnel according to IPv6 route lookup, send the IPv6 message upward to the CPU according to the aggregation routing table item;
the CPU is configured to: after receiving the IPv6 message, by using a software routing mode store a corresponding relation between acquired layer-2 information and a network prefix of an IPv6 destination address of the IPv6 message and synchronize the corresponding relation to the ASIC hardware forwarding table, and forward the IPv6 message out from an output port to which the layer-2 information corresponds.

5. The switch according to claim 4, wherein,
the ASIC switching chip is further configured to: after receiving the IPv6 message, search output port information of the IPv6 message in the ASIC hardware forwarding table, if the output port information of the IPv6 message is searched out, perform hardware forwarding to the IPv6 message.

6. The switch according to claim 4, wherein,
the CPU is further configured to:
after receiving the IPv6 message, perform the IPv6 route lookup according to the IPv6 destination address of the IPv6 message, if judging that the next hop of a route is a dynamic tunnel interface, further judge whether a table item to which the network prefix of the IPv6 destination address corresponds is saved in a dynamic tunnel forwarding table, and if the table item to which the network prefix of the IPv6 destination address corresponds is saved in the dynamic tunnel forwarding table, forward the IPv6 message out from the output port to which the layer-2 information corresponds according to the layer-2 information in the table item; and
the CPU is configured to store the corresponding relation between the acquired layer-2 information and the network prefix of the IPv6 destination address of the IPv6 message according to the following way: if judging that the table item to which the network prefix of the IPv6 destination address corresponds is not saved in the dynamic tunnel forwarding table, writing the network prefix of the IPv6 destination address into the dynamic tunnel forwarding table, performing an IPv4 protocol encapsulation to the IPv6 message according to acquiring an IPv4 destination address from the IPv6 destination address, performing IPv4 route lookup to the encapsulated message, and after learning the layer-2 information of the next hop through an Address Resolution Protocol (ARP), updating the layer-2 information in the table item to which the network prefix corresponds in the dynamic tunnel forwarding table as the layer-2 information of the next hop.

7. The switch according to claim 6, wherein,
the CPU comprises: an IPv6 message forwarding module, a tunnel forwarding module, a tunnel forwarding table update module, an IPv4 message forwarding module, an encapsulation information update module, and a storage module which stores the dynamic tunnel forwarding table;
the IPv6 message forwarding module is configured to: perform the IPv6 route lookup to the IPv6 message which is sent to the CPU upward according to the destination address, if judging that the next hop of the route is the dynamic tunnel interface, send the IPv6 message to the tunnel forwarding module;
the tunnel forwarding module is configured to: after receiving the IPv6 message sent by the IPv6 message forwarding module, judge whether the table item to which the network prefix of the IPv6 destination address of the IPv6 message corresponds is saved in the dynamic tunnel forwarding table, if the table item to which the network prefix of the IPv6 destination address of the IPv6 message corresponds is saved in the dynamic tunnel forwarding table, forward the IPv6 message out from the output port to which the layer-2 information corresponds according to the layer-2 information in the table item; and if the table item to which the network prefix of the IPv6 destination address of the IPv6 message corresponds is not saved in the dynamic tunnel forwarding table, send the network prefix of the IPv6 destination address to the tunnel forwarding table update module, perform the IPv4 protocol encapsulation to the IPv6 message according to acquiring the IPv4 destination address from the IPv6 destination address, and then send the encapsulated message to the IPv4 forwarding module;
the tunnel forwarding table update module is configured to: after receiving the network prefix sent by the tunnel forwarding module, judge whether the network prefix has been saved in the dynamic tunnel forwarding table; if the network prefix has not been saved in the dynamic tunnel forwarding table, create a new table item for that network prefix in the dynamic tunnel forwarding table;
the IPv4 message forwarding module is configured to: perform the IPv4 route lookup to the received encapsulated message, after learning the layer-2 information of the next hop through the ARP, send the layer-2 information of the next hop to the encapsulation information update module, and after performing a layer-2 encapsulation to the encapsulated message, forward the message out from the output port to which the layer-2 information of the next hop corresponds; and
the encapsulation information update module is configured to: after receiving the layer-2 information of the next hop, update the layer-2 information in the table item to which the network prefix corresponds in the dynamic tunnel forwarding table as the layer-2 information of the next hop.

8. The switch according to claim 7, wherein,
the tunnel forwarding table update module is further configured to: after judging that the network prefix has been saved in the dynamic tunnel forwarding table, restore an aging timer of the table item in which the network prefix is located to an initial value.

9. The switch according to claim 8, wherein,
the tunnel forwarding table update module is further configured to maintain a timing aging mechanism, and when an aging time is up, set a deletion flag for the table item.
